# EUROPEAN PATENT APPLICATION

(11) **EP 3 364 335 A2**
(43) Date of publication of application: **22.08.2018**
(21) Application number: 18152458.8
(22) Date of filing: 19.01.2018
(51) Int. Cl.: G06K 7/10

(54) **READING APPARATUS**

(30) Priority: 20.02.2017 JP 2017029258
(71) Applicant: Toshiba TEC Kabushiki Kaisha, Tokyo 141-8562 (JP)
(72) Inventor: WATANABE, Osamu, Shinagawa-ku,, Tokyo 141-8562 (JP)
(74) Representative: Takeuchi, Maya

(57) **Abstract**

In accordance with an embodiment, a wireless tag reading apparatus includes a housing enclosing a storage section and having an opening through which an article can pass into the storage section, an antenna on the housing, a door that is movable to open and close the opening, a locking mechanism configured to lock and unlock the door when the door is closed, a tag reader/writer configured to communicate with a wireless tag attached to the article within the storage section via the antenna, a controller configured to control the locking mechanism to lock the door while the tag reader/writer is communicating with the wireless tag, and unlock the door after the reader/writer has completed communicating with the wireless tag, and a door releasing mechanism configured to open the door when the locking mechanism unlocks the door.

## Description

### FIELD

Embodiments described herein relate generally to a reading apparatus.

### BACKGROUND

A reading apparatus reads information stored in an RFID tag, also referred to as a wireless tag. This type of reading apparatus can be used for various purposes and provided in various forms. For example, there is a reading apparatus that reads an RFID tag in a storage container having side walls covered with a radio wave absorbing material so that only the RFID tags within the storage container will be read by the reading apparatus. In such a reading apparatus, an antenna can be provided proximate to or within a table on which the storage container is to be placed or mounted.

However, in this conventional configuration, if the position of the storage container is not fully aligned with the antenna, an RFID tag outside the storage container may respond to a radio wave transmitted by the antenna beyond the storage container. Therefore, there exists a configuration in which the antenna, or a placing table including the antenna, is placed within a housing, or the storage container itself, having radio wave absorbing walls or the like. The range to which radio waves from the antenna travel is thus limited to the inside of this housing or container. The housing or container can include a door or the like to permit documents to be placed within.

However, in this configuration, when the door is opened during reading of the RFID tag, radio waves may leak out through the open door. Therefore, it is necessary for a user to confirm a status the reading apparatus, such as whether the tag reading process is in progress, before opening the door. Thus, the user operations of the reading apparatus will become complicated.

### SUMMARY OF INVENTION

To solve the above-cited problem, there is provided a wireless tag reading apparatus, comprising:
a housing enclosing a storage section and having an opening through which an article can pass into the storage section;
an antenna on the housing;
a door that is movable to open and close the opening;
a locking mechanism configured to lock and unlock the door when the door is closed;
a tag reader/writer configured to communicate with a wireless tag attached to the article within the storage section via the antenna;
a controller configured to control the locking mechanism to:
   lock the door while the tag reader/writer is communicating with the wireless tag, and
   unlock the door after the reader/writer has completed communicating with the wireless tag; and
a door releasing mechanism configured to open the door when the locking mechanism unlocks the door.

In an exemplary embodiment, the locking mechanism preferably may lock the door in accordance with an instruction to the tag reader/writer to start communication with the wireless tag.

The wireless tag reading apparatus according to the embodiment preferably may further comprise:
a sensor configured to detect whether the door is open or closed, wherein
   the locking mechanism locks the door when the door is detected by the sensor as closed, and
   the tag reader/writer initiates communication with the wireless tag when the door is locked.

In the embodiment the locking mechanism preferably may lock the door in accordance with an instruction the tag reader/writer to start communication with the wireless tag.

In the embodiment the locking mechanism preferably may be an electric lock.

In the embodiment the door releasing mechanism preferably may comprise an elastic spring, the elastic spring pushing against the door so as to open the door when the door is unlocked.

In the embodiment the door releasing mechanism preferably may be a push rod on the housing, the push rod pushing against the door so as to open the door when the door is unlocked.

The wireless tag reading apparatus according to the embodiment preferably may further comprise a communication I/F to transmit and receive information and instructions.

In another exemplary embodiment there is also provided a wireless tag reading system, comprising:
the wireless tag reading apparatus according to any one of the above embodiments; and
a main body connected to the wireless tag reading apparatus in a wired or wireless manner.

In yet another exemplary embodiment there is also provided a wireless tag reading system, comprising:
a main body including a touch panel;
a housing enclosing a storage section and having an opening through which an article can pass into the storage section;
an antenna connected to the housing;
a door configured to open and close the opening;
a locking mechanism configured to lock and unlock the door when the door is closed;
a tag reader/writer configured to communicate with a wireless tag attached to the article in the storage section via the antenna;
a controller configured to control the locking mechanism to:
   lock the door while the tag reader/writer is communicating with the wireless tag, and
   unlock the door after the reader/writer has completed communicating with the wireless tag; and
a door releasing mechanism configured to open the door when the locking mechanism unlocks the door.

In the embodiment the locking mechanism preferably may lock the door in accordance with an instruction received from the touch panel to the tag reader/writer to start communication with the wireless tag.

The wireless tag reading system according to the embodiment preferably may further comprise:
a sensor configured to detect whether the door is open or closed, wherein
   the locking mechanism locks the door when the door is detected by the sensor as closed, and
   the tag reader/writer initiates communication with the wireless tag when the door is locked.

In the embodiment the locking mechanism preferably may lock the door in accordance with an instruction received from the touch panel the tag reader/writer to start communication with the wireless tag.

In the embodiment the locking mechanism preferably may be an electric lock.

In the embodiment the door releasing mechanism preferably may comprise an elastic spring, the elastic spring pushing against the door so as to open the door when the door is unlocked.

In the embodiment the door releasing mechanism preferably may be a push rod on the housing, the push rod pushing against the door so as to open the door when the door is unlocked.

In yet another exemplary embodiment there is also provided a wireless tag reading apparatus, comprising:
a housing enclosing a storage section and having an opening through which an article can pass into the storage section, the housing being formed of a radio-wave blocking material;
a plate on which the article can be placed, the plate being inside the housing spaced from a bottom surface of the housing and being made of an insulating material;
an antenna between the plate and the bottom surface of the housing;
a door configured to open and close the opening;
a locking mechanism between the housing and the door, the locking mechanism being configured to lock and unlock the door when the door is closed;
a tag reader/writer configured to communicate, via the antenna, with a wireless tag attached to the article on the plate;
a controller configured to control the locking mechanism to:
   lock the door while the tag reader/writer is communicating with the wireless tag, and
   unlock the door after the reader/writer has completed communicating with the wireless tag; and
a door releasing mechanism configured to open the door once the locking mechanism unlocks the door.

In the embodiment the locking mechanism preferably may lock the door in accordance with an instruction received from the touch panel instructing the tag reader/writer to start communication with the wireless tag.

The wireless tag reading apparatus according to the embodiment preferably may further comprise:
a sensor configured to detect whether the door is open or closed, wherein
   the locking mechanism locks the door only when the door is detected by the sensor as closed, and
   the tag reader/writer initiates communication with the wireless tag only when the door is locked.

In the embodiment the locking mechanism preferably may lock the door in accordance with an instruction received from the touch panel instructing the tag reader/writer to start communication with the wireless tag.

In the embodiment the locking mechanism preferably may be an electric lock.

In the embodiment the door releasing mechanism preferably may comprise an elastic spring, the elastic spring pushing against the door so as to open the door when the door is unlocked.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 depicts an external perspective view of a document reading apparatus.
Figs. 2A and 2B depict schematic external perspective views of a reading section.
Fig. 3 depicts an external perspective front view of a locking mechanism provided in a housing.
Figs. 4A and 4B depict plan side views of a locking mechanism provided in a housing and a door.
Fig. 5 depicts hardware structure of a main body section and a reading section.
Fig. 6 depicts functional components of a main body section and a reading section.
Fig. 7 is a flowchart of an operation example of a main body section and a reading section.

### DETAILED DESCRIPTION

In accordance with an embodiment, a wireless tag reading apparatus includes a housing enclosing a storage section and having an opening through which an article can pass into the storage section, an antenna on the housing, a door that is movable to open and close the opening, a locking mechanism configured to lock and unlock the door when the door is closed, a tag reader/writer configured to communicate with a wireless tag attached to the article within the storage section via the antenna, a controller configured to control the locking mechanism to lock the door while the tag reader/writer is communicating with the wireless tag, and unlock the door after the reader/writer has completed communicating with the wireless tag, and a door releasing mechanism configured to open the door when the locking mechanism unlocks the door.

Hereinafter, a reading apparatus according to an example embodiment is described with reference to the accompanying drawings. It should be noted, that the particular embodiment described below is a possible example of a document reading apparatus that reads an RFID (Radio Frequency Identifier) tag attached to documents such as a billing statement, an admission ticket, a book, a driver's license, a passport, or the like. However, the present disclosure is not limited to use in this particular application.

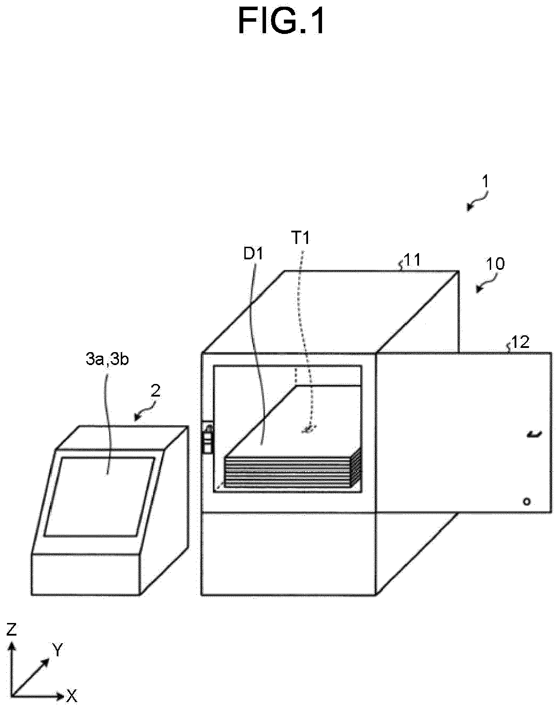

Fig. 1 depicts an external perspective view of a document reading apparatus 1 according to an embodiment. As shown in Fig. 1, the document reading apparatus 1 includes a main body section 2 and a reading section 10.

The main body section 2 includes a display 3b and a touch panel 3a on a front face of the display 3b. The display 3b is a display device such as a liquid crystal display.

The reading section 10 is an example of the reading apparatus. The reading section 10 is a reader/writer device capable of reading information from a RFID tag T1 which is attached to a document D1 and writing information into the RFID tag T1.

The RFID tag T1 stores information such as a document code for identifying the document D1 to which the RFID tag T1 is attached. Each RFID tag T1 is provided with a storage medium for writing a registration completion flag, which will be described later. For example, whether there is the registration completion flag can be checked by a gate sensor at an entrance to the document reading apparatus 1, and a warning can be made by a notifying module such as a buzzer when an RFID tag without a registration completion flag is placed in the document reading apparatus 1.

The reading section 10 is connected to the main body section 2 in a wired or wireless manner. The reading section 10 outputs (transmits) various types of information such as the document code, which has been read from the RFID tag T1, to the main body section 2. The main body section 2 and the reading section 10 are separate units. However, in some embodiments, the main body section 2 and the reading section 10 may be integrated.

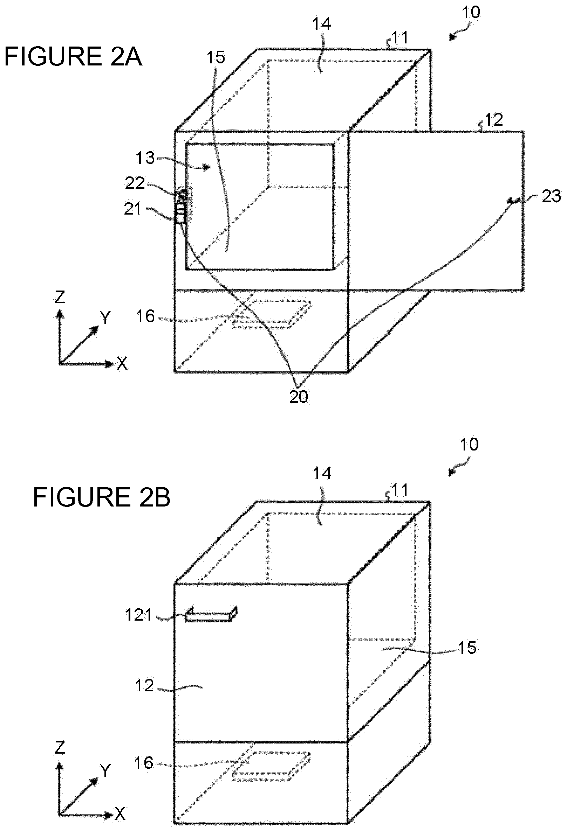

Figs. 2A and 2B depict external perspective views of the reading section 10. Fig. 2A depicts the reading section 10 with a door 12 open, and Fig. 2B depicts the reading section 10 with the door 12 closed.

The reading section 10 has a housing 11, the walls of which forms a main exterior of the reading section 10, and the door 12. One of the walls of the housing 11 has an opening 13, and the door 12 covers or uncovers the opening 13.

The housing 11 is formed in a box-like shape, for example, having a depth in the Y-direction, which is larger than a width in the X-direction.

The door 12 is attached to the housing so that the door 12 opens or closes the opening portion 13 to a storage room 14 inside of the housing 11 by a hinge (not specifically illustrated) on a right front surface of the housing 11. The door 12 covers and uncovers the opening 13. An opening-closing lever 121 is attached to the door 12. The user holds the opening-closing lever 121 to open and close the door 12.

The opening 13 has a size through which a plurality of documents D1 can pass simultaneously. The storage room 14 can accommodate a plurality of the documents D1. When the door 12 is open, a user can insert the document D1 into the storage room 14 or extract the document D1 from the storage room 14 through the opening 13. The document D1 may be placed within a storage container, which is formed of an insulating material such as wooden or glass.

Within the storage room 14, the document D1 is placed on a bottom surface 15, also referred to as a placing surface, of the storage room 14. The placing surface 15 is formed of a plate-shaped insulating material such as wood or glass, and is spaced from a bottom surface of the housing 11. Wall surfaces of the storage room 14, excluding the placing surface 15, are formed of a radio wave reflecting material that reflects the radio wave, such as a metal, a molding material, ferrite or the like.

In the housing 11, a planar RFID antenna 16 and a circuit board (not specifically illustrated) are provided between the placing surface 15 and the bottom surface of the housing.

By emitting a radio wave in the UHF band or the like, the RFID antenna 16 communicates with the RFID tag T1 attached to the document D1 in the storage room 14. The RFID antenna 16 emits a radio wave in cooperation with a reader/writer 41, which will be described later when the door 12 is closed.

To prevent the radio wave in the housing 11 from leaking to the outside and prevent the external radio wave from being transmitted to the inside of the housing 11, wall surfaces of the housing 11 and the door 12 are formed of a radio wave reflecting material, or a radio wave absorbing material such as a metal, a molding material, ferrite, and the like.

The reading section 10 also includes a locking mechanism 20 that can control opening and closing of the door 12. The locking mechanism 20 is provided between the housing 11 and the door 12. In an unlocked state, the door 12 can be open or closed. In a locked state, the door 12 cannot be opened and closed.

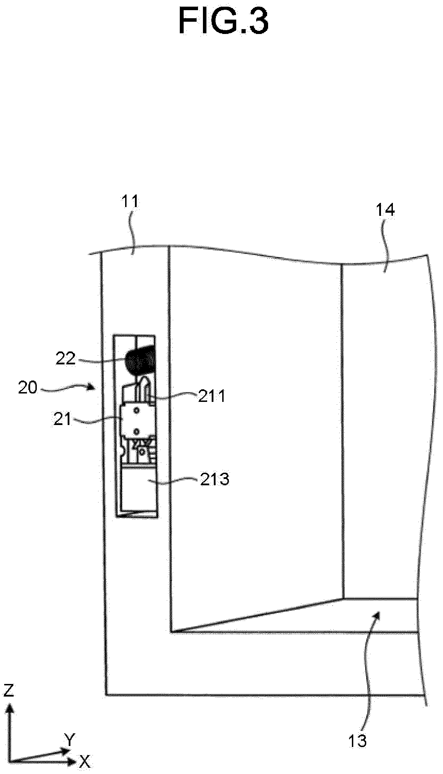

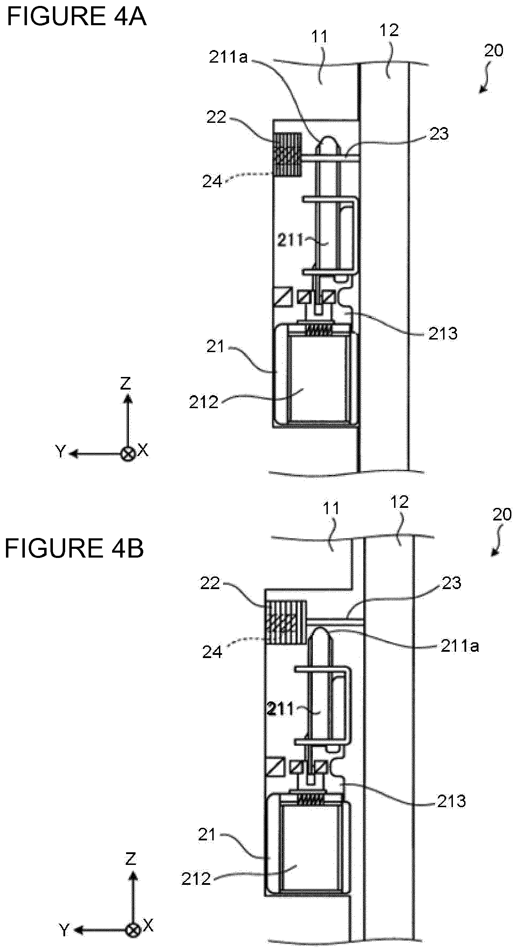

Fig. 3 depicts an external perspective front view of the locking mechanism 20 provided in the housing 11, seen in the Y direction. Figs. 4A and 4B depict plan side views of the lock mechanism 20 provided in the housing 11 and the door 12 seen in the X-direction. Fig. 4A depicts the locked state, and Fig. 4B depicts the unlocked state.

The locking mechanism 20 has an electromagnetic lock 21 and an opening spring 22 provided in the housing 11 and a hook 23 provided in the door 12. The electromagnetic lock 21 is an example of an electric lock, and includes a bar 211, a solenoid 212 and a frame 213. The bar 211 is an example of an engagement section and is rod-like shaped. The bar 211 is movable in a longitudinal direction along a length of the bar 211 between predetermined two positions. In the example embodiment described herein, the predetermined two positions are an unlocking position and a locking position, which will be described later. A tip 211a of the bar 211 has a smooth inclined surface so that the bar 211 can move smoothly in the longitudinal direction of the bar 211 when the door 12 opens or closes. The solenoid 212 is an example of an operating section that moves the bar 211 from one of the two predetermined positions to the other. As depicted in Fig. 3, the frame 213 is formed of sheet metal in a rectangular parallelepiped enclosure and covers the solenoid 212 (see also Fig. 4A & Fig. 4B), depicted in Fig. 3, for protection.

The locking position is a position of the bar 211 when the door 12 is locked. To engage the bar at the locking position, the solenoid 212 causes the bar 211 to shift upwards such that a length of the bar 211 that is projected from the frame 213, referred to as a projecting length, increases, as depicted in Fig. 4A. The unlocking position is a position of the bar 211 when the door 12 is unlocked. To disengage the bar from the locking position, the projecting length of the bar 211 from the frame 213 at the unlocking position is shorter than the projecting length of the bar 211 at the locking position, as depicted in Fig. 4B. That is, the bar 211 protrudes at the locking position and is retracted at the unlocking position.

The solenoid 212 operates by electric power and generates a driving force to move the bar 211 to and maintain the bar 211 at the unlocking position or the locking position. When the solenoid 212 is not operated, the bar 211 is maintained at an intermediate position between the unlocking position and the locking position by an elastic force of an elastic member (not shown) such as a helical spring or a rubber. The bar 211 can move between the unlocking position and the intermediate position when the solenoid 212 is not operated. The intermediate position is preferably a position where a user can open the door 12 but the door 12 is supported at the tip 211a of the bar 211 such that the door 12 is maintained closed. Specifically, it is preferable that the intermediate position is a position where the tip 211a of the bar 211 abuts against the hook 23 of the door 12 when the door 12 is closed.

The hook 23 is an example of a part of a lock mechanism engaged with the bar 211. The hook 23 is provided at a position as to engage with the tip of the bar 211 when the door 12 is closed. The hook 23 is formed of, for example, a U-shaped or B-shaped plate and has a through hole (not shown) for fitting the bar 211, referred to as a fitting hole. When the bar 211 is at the locking position, the bar 211 fits into the fitting hole of the hook 23, and the door 12 is locked by engagement of the bar 211 and the hook 23, as depicted in Fig. 4A. When the bar 211 is at the unlocking position, that is, the bar is disengaged from the fitting hole of the hook 23, the door 12 is unlocked. When the bar 211 is at the intermediate position, it is assumed that the tip 211a of the bar 211 is positioned at the fitting hole of the hook 23 in the example embodiment described herein.

The opening spring 22 is an example of an elastic door releasing mechanism, which opens the door 12. The opening spring 22 is formed by, for example, a helical spring or the like, and is provided at a position opposed to the hook 23 when the door 12 is closed. The opening spring 22 contracts when the door 12 is closed and generates an elastic force for pushing the door 12 open. Specifically, when the door 12 is closed and locked, the hook 23 compresses the opening spring 22, which accumulates kinetic energy. Once the locking is released, the opening spring 22 creates an elastic force that opposes the compression. Specifically, when the bar 211 moves from the locking position to the unlocking position, the opening spring 22 presses the hook 23 as to open the door 12, and thus the door 12 is automatically opened. The elastic force of the opening spring 22 is designed such that the door 12 supported by the tip 211a at the intermediate position of the bar 211 can be held closed when the solenoid 212 is not operated.

The reading section 10 also includes an opening-closing detection section 24 for detecting an open-closed state of the door 12. For example, the opening-closing detection section 24 is provided between the housing 11 and the door 12, and outputs a signal corresponding whether the door 12 is open or closed. In the example embodiment described herein, the opening-closing detection section 24 is provided inside the opening spring 22 as depicted in Fig. 4. The opening-closing detection section 24 is, for example, a mechanical switch or the like that detects whether the door 12 is open or closed by depression or other operation of the switch caused by the hook 23. The position of the opening-closing detection section 24 is not limited to inside the opening spring 22.

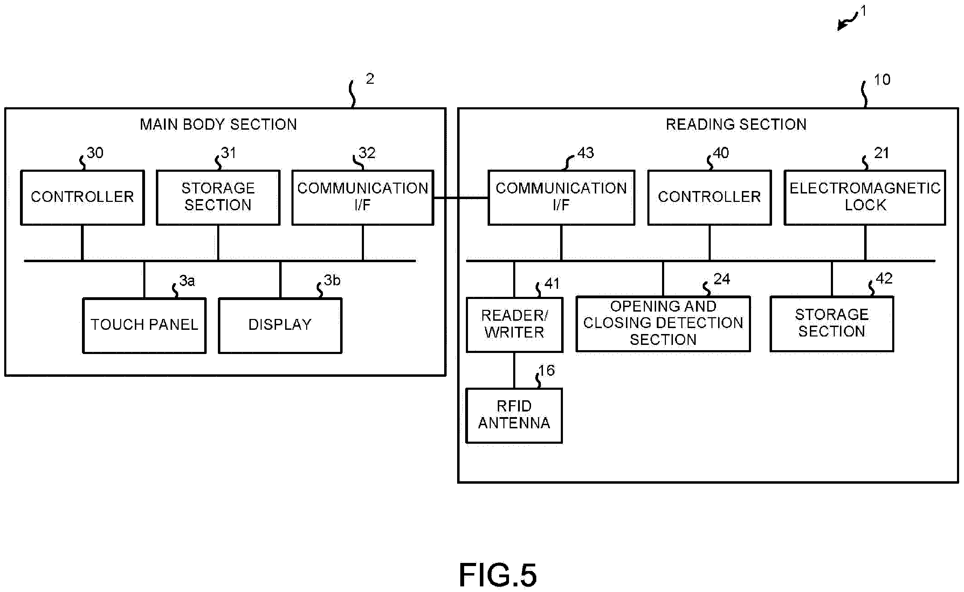

Fig 5 depicts the hardware structures of the main body section 2 and the reading section 10.

The main body section 2 includes a controller 30 having a CPU (Central Processing Unit), a ROM (Read Only Memory) and a RAM (Random Access Memory). The ROM stores various programs executed by the CPU and various data. The RAM temporarily stores data and programs when the CPU executes various programs.

The touch panel 3a and the display 3b are connected to the controller 30 via various input/output circuits (not shown).

A storage section 31 and a communication I/F 32 are connected to the controller 30 via various input/output circuits (not shown).

The storage section 31 includes a nonvolatile storage medium such as an HDD (Hard Disk Drive) or an SSD (Solid State Drive). The storage section 31 stores various programs and various data relating to the operation of the main body section 2. The storage section 31 stores the document code read in the reading section 10. The storage section 31 may store a data table, hereinafter, referred to simply as a table, of a database indicating associations of the document D1 relating to a document code with information of a user who possesses the document D1 having the same document code. The communication I/F 32 is used for sending and receiving various data to and from the reading section 10.

The reading section 10 includes a controller 40 having a computer including a CPU, a ROM and a RAM. The ROM stores various programs executed by the CPU and various data. The RAM temporarily stores data and programs at the time the CPU executes various programs.

The controller 40 is connected to the reader/writer 41, a storage section 42 and a communication I/F 43 together with the electromagnetic lock 21 and the opening-closing detection section 24 described above via various input/output circuits (not shown).

The reader/writer 41 communicates with the RFID tag T1 of the document D1 stored in the storage room 14 via a RFID antenna 16. Specifically, the reader/writer 41 drives the RFID antenna 16 to emit a modulated wave, hereinafter, referred simply as a radio wave, for reading and writing the RFID tag T1. The reader/writer 41 outputs various information, such as the document code, that is read from the RFID tag T1 via the RFID antenna 16 to the controller 40. The reader/writer 41 outputs via the RFID antenna 16 to and writes information, referred to as a writing object, including flag information into the RFID tag T1.

The storage section 42 is a storage device including a nonvolatile storage medium such as an HDD or an SSD. The storage section 42 stores various programs and various data relating to the operation of the reading section 10. The communication I/F 43 is used for transmitting and receiving various data with the main body section 2. The controller 40, the reader/writer 41, the storage section 42 and the communication I/F 43 of the reading section 10 are mounted on a circuit board (not shown).

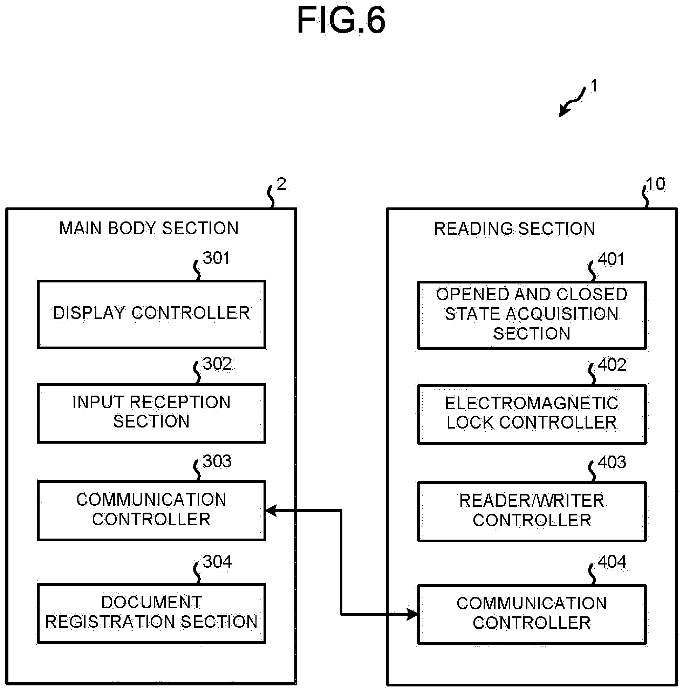

Fig. 6 depicts the functional components of the main body section 2 and the reading section 10.

The controller 30 (CPU) of the main body section 2 cooperates with the program stored in the storage section 31 and functions as a display controller 301, an input reception section 302, a communication controller 303 and a document registration section 304.

The display controller 301 controls the display 3b to display various screens on the display 3b. For example, the display controller 301 displays a screen containing a button for an operator to instruct a start of a reading of the document code, hereinafter referred to as a reading start button, and a button for an operator to instruct an end of the reading, hereinafter, referred to as reading end button. If a table is stored in the storage section 31, the display controller 301 may read the information corresponding to the document code that has been transmitted from the reading section 10 from the table, and display the information on the display 3b.

The input reception section 302 receives an operator's input via the touch panel 3a. For example, the input reception section 302 outputs instruction information corresponding to the operator to the controller 30 if the operator pressed a button on an operation screen displayed on the display 3b.

The communication controller 303 controls the communication I/F 32 to transmit and receive various information to and from the reading section 10 via the communication I/F 32. For example, if the reading start button is pressed, the communication controller 303 transmits the instruction information for the start of the reading to the reading section 10. The communication controller 303 receives the document code that has been transmitted from the reading section 10. If the reading end button is pressed, the communication controller 303 transmits the instruction information for the end of the reading to the reading section 10. If the registration by the document registration section 304 is completed, the communication controller 303 transmits the instruction information for completion of the registration to the reading section 10.

The document registration section 304 performs registration by storing the document code that has been sent from the reading section 10 in a predetermined area of the storage section 31 as a read document code. Specifically, the document registration section 304 stores the document code that has been received by the communication controller 303, together with the date and time at which the document code is received, in a storage area for registration. The storage area for registration may be provided by an external device capable of communicating with the main body section 2.

The controller 40 (CPU) of the reading section 10 cooperates with the program stored in the storage section 42 and functions as an open-closed state acquisition section 401, an electromagnetic lock controller 402, a reader/writer controller 403, and a communication controller 404.

The open-closed state acquisition section 401 cooperates with the opening-closing detection section 24 to acquire the open-closed state information indicating whether the door 12 is open or closed.

The electromagnetic lock controller 402 controls the locked state or the unlocked state of the door 12 by operating the solenoid 212 of the electromagnetic lock 21. Specifically, the electromagnetic lock controller 402 moves the bar 211 to the locking position when the start of reading is instructed from the document reading apparatus 1, and the open-closed state information obtained by the open-closed state acquisition section 401 indicates the closed state of the door 12. As a result, the door 12 is now locked. The electromagnetic lock controller 402 moves the bar 211 to the unlocking position when the reading and writing of the RFID tag T1 by the reader/writer 41 are completed. Subsequently, the door 12 unlocked, and the door 12 is automatically opened by an elastic force of the opening spring 22.

The reader/writer controller 403 controls the reader/writer 41 and performs reading and writing from and to the RFID tag T1 attached to the document D1. Specifically, the reader/writer controller 403 starts reading when the start of the reading is instructed from the main body section 2 and the electromagnetic lock controller 402 causes the electromagnetic lock 21 to unlock the door 12. When the end of the reading is instructed from the main body section 2, the reader/writer controller 403 ends the reading by the reader/writer 41. When the registration completion is instructed from the main body section 2, the reader/writer controller 403 controls the reader/writer 41 and starts writing the registration completion flag. Here, the registration completion flag is information indicating that the document registration is completed, and is written in a predetermined storage area of the RFID tag T1.

The communication controller 404 controls the communication I/F 43 to transmit and receive various information to and from the main body section 2 via the communication I/F 43. For example, the communication controller 404 receives the instruction information for the start of reading transmitted from the main body section 2. The communication controller 404 transmits the document code read from the RFID tag T1 by the reader/writer controller 403 to the main body section 2. The communication controller 404 receives the instruction information for the end of reading sent from the main body section 2. The communication controller 404 receives the instruction information for registration completion transmitted from the main body section 2.

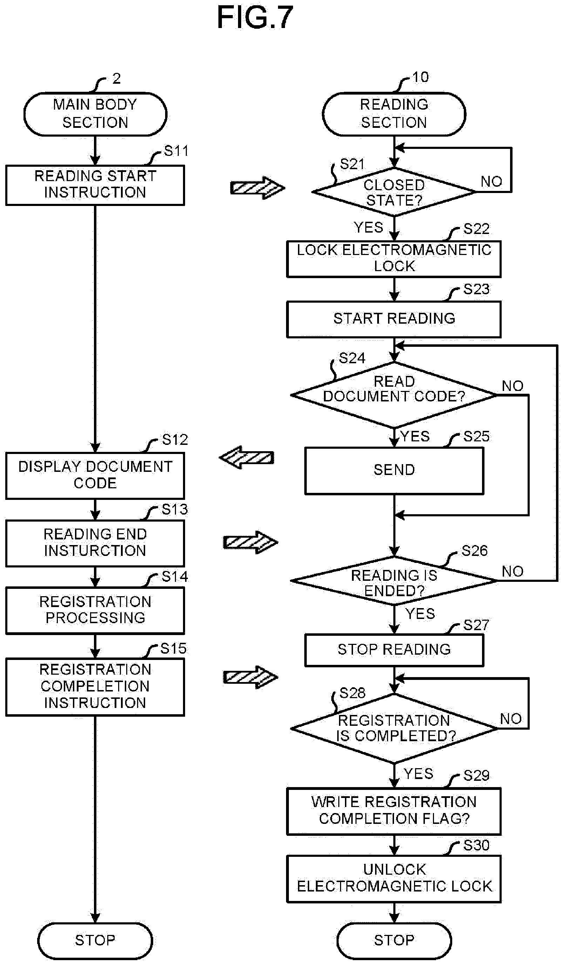

Fig. 7 is a flowchart of an operation example of the main body section 2 and the reading section 10.

A user of the document reading apparatus 1 opens the door 12 of the reading section 10 and accommodates the document D1 in the storage room 14. Then, the user starts a flow of a reading process by pressing the reading start button displayed on the display 3b of the main body section 2.

In the main body section 2, if the input reception section 302 receives a pressing of the reading start button, the communication controller 303 transmits the instruction information for the start the reading to the reading section 10 (Act S11).

In the reading section 10, if the communication controller 404 receives the instruction information for the start of reading, the electromagnetic lock controller 402 determines whether or not the door 12 is closed based on the open-closed state information acquired by the open-closed state acquisition section 401 (Act S21). Here, if the electromagnetic lock controller 402 determines that the door 12 is in the open state, the electromagnetic lock controller 402 stands by until the door 12 is closed (No in Act S21). In the standby state in Act S21, the electromagnetic lock controller 402 may cooperate with the display controller 301 of the main body section 2 to display a screen for prompting closing of the door 12.

If it is determined in Act S21 that the door 12 is in the closed state (Yes in Act S21), the electromagnetic lock controller 402 locks the door 12 by moving the bar 211 to the locking position (Act S22).

Subsequently, the reader/writer controller 403 starts reading the RFID tag T1 (Act S23). The reader/writer controller 403 determines whether or not the document code has been read from the RFID tag T1 (Act S24). If the document code has not been read (No in Act S24), the flow proceeds to the processing in Act S26. If the document code has been read (Yes in Act S24), the communication controller 404 then transmits the document code to the main body section 2 (Act S25), and the flow proceeds to the processing in Act S26.

In Act S26, the reader/writer controller 403 determines whether or not the end of reading has been instructed from the main body section 2 (Act S26). If there is no reading end instruction (No in Act S26), the flow returns to the processing in Act S24.

If reading of the RFID tag T1 is started with the storage room 14 empty, a loop of Act S24 to Act S26 continues without reading any RFID tag T1. Therefore, to avoid such a situation, if a predetermined time, for example, 5 seconds, elapses or if the above loop is executed a predetermined number of times without reading any RFID tag T1, the reading of the RFID tag T1 is terminated and the flow proceeds to the processing in Act S30. In this case, the reader/writer controller 403 preferably displays a message for indicating that the RFID tag T1 cannot be read by cooperating with the display controller 301 of the main body section 2.

In the main body section 2, if the communication controller 303 receives the document code from the reading section 10, the display controller 301 displays the document code on the display 3b (Act S12). The user of the main body section 2 presses the reading end button displayed on the display 3b if the user refers to the document codes displayed on the display 3b and confirms that the document codes of all the documents D1 put in the storage room 14 is displayed. If the input reception section 302 receives the operation on the read end button, the communication controller 303 transmits the instruction information for the reading end to the reading section 10 (Act S13).

In the reading section 10, the communication controller 404 receives the instruction information for the end of reading. If the reader/writer controller 403 determines that the end of reading is instructed based on the reception result of the communication controller 404 (Yes in Act S26), the reader/writer controller 403 stops reading the RFID tag T1 (Act S27). The reader/writer controller 403 then stands by until the registration completion instruction is received from the main body section 2 (No in Act S28).

In the main body section 2, the document registration section 304 performs a registration processing on each of the displayed document codes (Act S14). Then, the communication controller 303 sends the instruction information for the completion of registration to the reading section 10 (Act S15) and terminates the processing.

In the reading section 10, the communication controller 404 receives the instruction information for the completion of registration. If determining that the completion of registration is instructed based on the reception result of the communication controller 404 (Yes in Act S28), the reader/writer controller 403 controls the reader/writer 41 to write the registration completion flag in RFID tag T1 of each document D1 (Act S29). If writing of the registration completion flag is completed, the electromagnetic lock controller 402 moves the bar 211 to the unlocking position to unlock the door 12 (Act S30), and ends the flow of the reading process.

When the door 12 is pushed to open by the elastic force of the opening spring 22 in the Act S30, the door 12 is automatically opened. Therefore, the user of the document reading apparatus 1 can recognize the completion of the reading processing and the writing processing described above by the opening of the door 12. Along with the execution of the processing in Act S29, the electromagnetic lock controller 402 cooperates with the display controller 301 of the main body section 2 to notify a message indicating the completion of the processing and a message for prompting the user to remove the document D1 from the storage room 14.

As described above, , the document D1, which is a reading object, is accommodated in the storage room 14 of the reading section 10 and the door 12 is closed. A plurality of RFID tags T1 attached to respective documents D1 in the storage room14, which is space from the user, can be read simultaneously. In the reading section 10, it is possible to limit a range to which radio waves from the RFID antenna 16 travel to the inside of the housing 11, and thus to prevent radio waves from leaking out of the housing 11 and to read the RFID tag T1 efficiently.

In the reading section 10, during a communication processing, including reading processing and writing processing, with the RFID tag T1, the door 12 locked, and upon completion of the communication processing the door 12 is unlocked. Thus, in the reading section 10, it is possible to prevent the door 12 from being opened during the communication processing, and thus radio waves in the housing 11 can be prevented from leaking to the outside. Furthermore, upon the completion of communication processing and unlocking of the door 12, the door 12 is opened. As a result, it is possible to save the labor of opening the door while confirming the operation state of the reading section 10, so that the operation of opening the door 12 of the housing 11 can be simplified.

While certain embodiments have been described, these embodiments have been presented by way of example only, and are not intended to limit the scope of the invention. Indeed, the novel embodiments described herein may be embodied in a variety of other forms. Furthermore, various omissions, substitutions and changes in the form of the embodiments described herein may be made without departing from the scope of the invention. The accompanying claims and their equivalents are intended to cover such forms or modifications as would fall within the scope of the invention.

For example, in the above example embodiment, the locking mechanism is described with reference to Fig. 3 and Fig. 4. However, the locking mechanism is not limited to this example, and other known locking mechanisms may be used. In the above example embodiment, when the electromagnetic lock 21 unlocks the door 12, the door 12 is opened by an elastic force of the opening spring 22 on the side surface of the housing 11 facing the hook 23, but other mechanism may be adopted. For example, the opening spring 22 may be attached to a side surface on a hook 23 side facing the housing 11 when the door 12 is closed.

In the above example embodiment, the door releasing mechanism is described with the opening spring 22. However, the door leasing mechanism is not limited to this example. For example, a push rod may be provided at the housing 11 or the door 12 for pushing the door 12 open upon the unlocking by the electromagnetic lock 21.

In the above example embodiment, the reading of the RFID tag T1 is started in response to an instruction from the user, but the present disclosure is not limited to this example. For example, the reading of the RFID tag T1 may be started when the door 12 switches from the open state and the electromagnetic lock 21 locks the door 12, without requiring the instruction from the user.

Furthermore, in the above example embodiment, the reading of the RFID tag T1 is terminated in response to the end instruction from the user, but the present discloser is not limited to this example. For example, if a reading of a number of RFID tags T1, as instructed is the user, has been completed, the reading process may be automatically terminated. Furthermore, the RFID tag T1 may be read for a predetermined time, for example, one minute, and then the reading may be automatically ended after the predetermined time elapses.

In the above-described example embodiment, the door 12 is unlocked and the door 12 is opened when the reading and writing of the RFID tag T1 are completed, but the present disclosure is not limited to this example. Specifically, during communication with the RFID tag T1 via the RFID antenna 16, the door 12 may be locked, and at the end of the communication the door 12 may be unlocked. Therefore, in the case of processing for executing either reading or writing on the RFID tag T1, for example, the door 12 may be unlocked and the door 12 may be opened with the completion of the processing.

In the above example embodiment, the object read by the reading section 10 is the document D1, but the object to be read by the reading section 10 is not limited this example and other articles may be used.

## Claims

1. A wireless tag reading apparatus, comprising:
a housing enclosing a storage section and having an opening through which an article can pass into the storage section;
an antenna on the housing;
a door that is movable to open and close the opening;
a locking mechanism configured to lock and unlock the door when the door is closed;
a tag reader/writer configured to communicate with a wireless tag attached to the article within the storage section via the antenna;
a controller configured to control the locking mechanism to:
lock the door while the tag reader/writer is communicating with the wireless tag, and
unlock the door after the reader/writer has completed communicating with the wireless tag; and
a door releasing mechanism configured to open the door when the locking mechanism unlocks the door.

2. The wireless tag reading apparatus according to claim 1, wherein the locking mechanism locks the door in accordance with an instruction to the tag reader/writer to start communication with the wireless tag.

3. The wireless tag reading apparatus according to claim 1 or 2, further comprising:
a sensor configured to detect whether the door is open or closed, wherein
the locking mechanism locks the door when the door is detected by the sensor as closed, and
the tag reader/writer initiates communication with the wireless tag when the door is locked.

4. The wireless tag reading apparatus according to claim 3, wherein the locking mechanism locks the door in accordance with an instruction the tag reader/writer to start communication with the wireless tag.

5. The wireless tag reading apparatus according to any one of claims 1-4, wherein the locking mechanism is an electric lock.

6. The wireless tag reading apparatus according to any one of claims 1-5, wherein the door releasing mechanism comprises an elastic spring, the elastic spring pushing against the door so as to open the door when the door is unlocked.

7. The wireless tag reading apparatus according to any one of claims 1-6, wherein the door releasing mechanism is a push rod on the housing, the push rod pushing against the door so as to open the door when the door is unlocked.

8. The wireless tag reading apparatus according to any one of claims 1-7, further comprising a communication I/F to transmit and receive information and instructions.

9. A wireless tag reading system, comprising:
the wireless tag reading apparatus according to any one of claims 1-8; and
a main body connected to the wireless tag reading apparatus in a wired or wireless manner.

10. A wireless tag reading apparatus, comprising:
a housing enclosing a storage section and having an opening through which an article can pass into the storage section, the housing being formed of a radio-wave blocking material;
a plate on which the article can be placed, the plate being inside the housing spaced from a bottom surface of the housing and being made of an insulating material;
an antenna between the plate and the bottom surface of the housing;
a door configured to open and close the opening;
a locking mechanism between the housing and the door, the locking mechanism being configured to lock and unlock the door when the door is closed;
a tag reader/writer configured to communicate, via the antenna, with a wireless tag attached to the article on the plate;
a controller configured to control the locking mechanism to:
lock the door while the tag reader/writer is communicating with the wireless tag, and
unlock the door after the reader/writer has completed communicating with the wireless tag; and
a door releasing mechanism configured to open the door once the locking mechanism unlocks the door.

11. The wireless tag reading apparatus according to claim 10, wherein the locking mechanism locks the door in accordance with an instruction received from the touch panel instructing the tag reader/writer to start communication with the wireless tag.

12. The wireless tag reading apparatus according to claim 10 or 11, further comprising:
a sensor configured to detect whether the door is open or closed, wherein
the locking mechanism locks the door only when the door is detected by the sensor as closed, and
the tag reader/writer initiates communication with the wireless tag only when the door is locked.

13. The wireless tag reading apparatus according to claim 12, wherein the locking mechanism locks the door in accordance with an instruction received from the touch panel instructing the tag reader/writer to start communication with the wireless tag.

14. The wireless tag reading apparatus according to any one of claims 10-13, wherein the locking mechanism is an electric lock.

15. The wireless tag reading apparatus according to any one of claims 10-14, wherein the door releasing mechanism comprises an elastic spring, the elastic spring pushing against the door so as to open the door when the door is unlocked.
